Europäisches Patentamt

European Patent Office

Office européen des brevets

(19)

(11) Veröffentlichungsnummer: **0 246 436**
**B1**

(12) **EUROPÄISCHE PATENTSCHRIFT**

(45) Veröffentlichungstag der Patentschrift:
04.07.90

(21) Anmeldenummer: 87104976.3

(22) Anmeldetag: 03.04.87

(51) Int. Cl.⁵: **B60Q 1/52, B60Q 1/44**

(54) Vorrichtung zum automatischen Einschalten einer Warnblinkanlage.

(30) Priorität: 17.05.86 DE 3616826

(43) Veröffentlichungstag der Anmeldung:
25.11.87 Patentblatt 87/48

(45) Bekanntmachung des Hinweises auf die Patenterteilung:
04.07.90 Patentblatt 90/27

(84) Benannte Vertragsstaaten:
DE FR GB IT SE

(56) Entgegenhaltungen:
DE-A- 3 107 919
GB-A- 2 029 108
GB-A- 2 032 719
GB-A- 2 038 115
GB-A- 2 119 880
US-A- 4 346 365

(73) Patentinhaber: Daimler-Benz Aktiengesellschaft,
Postfach 600202 Mercedesstrasse 136,
D-7000 Stuttgart 60(DE)

(72) Erfinder: Neuffer, Klaus, Fichtestrasse 10,
D-7030 Böblingen(DE)
Erfinder: Frey, Egon, Eyacher Strasse 9,
D-7245 Starzach(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine Vorrichtung zum automatischen Einschalten einer willkürlich von Hand ein- und ausschaltbaren Warnblinkanlage eines Kraftfahrzeuges bei Aufprallunfällen und Notbremsungen gemäß dem Oberbegriff des Anspruchs 1.

Es sind bereits gattungsgemäße Schaltvorrichtungen bekannt (DE-A 27 06 962, DE-A 29 37 040), welche einen Trägheitsschalter aufweisen, dessen Ansprechschwelle durch die durch Magnetwirkung unterstützte Kippträgheit eines kegelstumpfförmigen Körpers gegen in der Fahrtebene des Fahrzeuges wirkende Beschleunigungen bestimmt wird. Nach Überwindung dieser Kippträgheit wird bei Schrägstellung des Körpers ein elektrischer Schalter geschlossen, welcher unmittelbar eine Schaltvorrichtung mit Selbsthaltestromkreis aktiviert, die ihrerseits die Warnblinkanlage des Fahrzeuges einschaltet.

Da diese Vorrichtung außer bei Zusammenstößen mit Hindernissen (andere Fahrzeuge, Leitplanken etc.) auch bei Notbremsungen automatisch die Warnblinkanlage einschalten soll, muß die Klipptträgheit des Körpers relativ niedrig angesetzt werden, damit auch nicht-stoßartig einsetzende (Brems-) Verzögerungen den Körper aus seiner Ruhelage auszulenken vermögen.

Dies führt aber dazu, daß auch kurzes, heftiges Betätigen der Bremsen oder Stöße, welche von Fahrbahnunebenheiten wie Schlaglöchern und Bordsteinkanten auf das darüber rollende Fahrzeug ausgeübt werden, zum unverzüglichen, aber unbeabsichtigten Einschalten der Warnblinkanlage führen können, so daß der Fahrzeugführer und umgebende Verkehrsteilnehmer unnötig irritiert würden.

Die DE-A 22 18 668 offenbart eine ebenfalls gattungsgemäße Vorrichtung, die einen Trägheitsschalter mit einer durch Federkraft rückstellbaren trägen Masse aufweist, dessen Ansprechschwelle durch Ändern der Federvorspannung einstellbar ist.

Aufgabe der Erfindung ist es, eine gattungsgemäße Vorrichtung so auszubilden, daß sie die Warnblinkanlage unverzüglich bei Aufprallunfällen hoher Beschleunigungsintensität, jedoch bei geringerwertigen Verzögerungen oder Beschleunigungen des Fahrzeuges mit Zeitverzug und in Abhängigkeit von deren Einwirkdauer automatisch einschaltet und nach jedem automatischen Einschalten mittels des vorhandenen Warnblinkerschalters oder des Zündschalters von Hand wieder ausgeschaltet werden kann.

Diese Aufgabe wird erfindungsgemäß mit den kennzeichnenden Merkmalen des Hauptanspruches gelöst. Die Unteransprüche 2 bis 8 kennzeichnen vorteilhafte Weiterbildungen der erfindungsgemäßen Vorrichtung.

Indem einem Trägheitsschalter mit hoher Ansprechwelle ein Beschleunigungssensor mit niederer Ansprechschwelle parallel geschaltet wird, wird zunächst eine Aufteilung der Vorrichtungssensorik geschaffen, die es erlaubt, Beschleunigungen hoher Intensität (Aufprallunfall) und geringerer Intensität (Voll-, Notbremsung) zuverlässig zu erfassen und zu unterscheiden. Der große Vorteil der gewählten Anordnung ist es, daß durch Nachschalten eines Integrators und eines Schwellwertschalters hinter den Signalausgang des Beschleunigungssensors impulsartige Signale des letzteren bei geringer Löschzeitkonstante des Integrators ausgefiltert werden, während ein länger anstehendes Signal des Beschleunigungssensors, z. B. bei einer Notbremsung oder beim Schleudern, das Ausgangssignal des Integrators so weit anwachsen läßt, daß schließlich der Schwelwertschalter durch- und die Warnblinkanlage eingeschaltet wird.

Die DE-A 32 08 115 offenbart zwar bereits eine Vorrichtung, die u. a. die Warnblinkanlage eines Kfz automatisch einschaltet und zwei verschiedene Trägheitsschalter aufweist. Einer davon dient nur zur Erfassung von Verzögerungen im Fahrbetrieb, der andere nur zur Erfassung von Erschütterungen des abgestellten Fahrzeugs. Letzterem Trägheitsschalter ist ein R-C-Filterglied nachgeschaltet, welches jedoch bei aufabengemäßer Funktion keine Signalverzögerung bewirken darf. Ferner ist aus der WO-A1 85/04626 eine Vorrichtung zum Einschalten der Bremslichter eines Kfz auch bei Verzögerungen nur durch Motorbremsung bekannt, in welcher einem unterdruckbetätigten Sensorschalter ein Signalverzögerungsglied nachgeschaltet ist, welches Aufflackern der Bremslichter bei jeder kurzzeitigen Fahrpedalentlastung, z. B. zum Gangwechsel, unterdrückt.

Aufgrund einer ODER-Verknüpfung der Ausgänge des Trägheits- und des Schwellwertschalters gemäß der Erfindung führt ein Ansprechen eines von beiden Schaltern zur automatischen Aktivierung der Warnblinkanlage des Kraftfahrzeuges.

Bei leistungsstarken Kraftfahrzeugen, welche hohe Anfahrbeschleunigungen erreichen, kann es erforderlich sein, gemäß vorteilhaften Weiterbildungen der Erfindung das Ausgangssignal des Beschleunigungssensors vor oder nach dem Integrator mit einem Bremssignal über ein UND-Glied zu verknüpfen, um so ein automatisches Einschalten der Warnblinkanlage bei vollen Beschleunigen zu unterbinden.

Eine weitere vorteilhafte Variante der erfindungsgemäßen Vorrichtung sieht einen zusätzlichen Kontakt in der beschleunigungsempfindlichen Schalteinrichtung vor, welcher bei einer Drehung des Kraftfahrzeuges um 180° um seine Längs- oder Querachse anspricht und ebenfalls die Warnblinkanlage aktiviert, wenn z. B. das Fahrzeug von der Straße abkommt, sich überschlägt und auf dem Dach liegenbleibt. Vor allem bei Dunkelheit gibt ein entsprechend ausgerüstetes und abseits der Straße verunglücktes Fahrzeug ein auffälliges Notsignal.

Selbstverständlich könnte auch der Trägheitsschalter mit hoher Ansprechschwelle mit einem Dachlagekontakt kombiniert werden, welcher auf nicht in der Fahrtebene wirkende Beschleunigungen schneller anspricht.

Der Dachlagekontakt wird vorzugsweise bei Verknüpfung des Ausgangssignals des Beschleunigungssensors bzw. der beschleunigungsempfindlichen Schalteinrichtung über ein UND-Glied mit dem Bremssignal vorgesehen, ist aber selbstverständlich in den Beschleunigungssensor zu integrieren, wenn diese Verknüpfung nicht vorgesehen ist.

In der Zeichnung sind Ausführungsbeispiele der erfindungsgemäßen Vorrichtung schematisch dargestellt und werden im folgenden näher beschrieben.

Es zeigen

Fig. 1 ein vollständiges Schaltschema einer Vorrichtung nach der Erfindung,

Fig. 2 einen Ausschnitt aus dem Schaltschema mit einer Verknüpfung eines Beschleunigungs- mit einem Bremssignal als Variante,

Fig. 3 eine weitere Ausführungsmöglichkeit der Erfindung mit Verknüpfung eines Beschleunigungs- mit einem Bremssignal und einem zusätzlichen Dachlagekontakt.

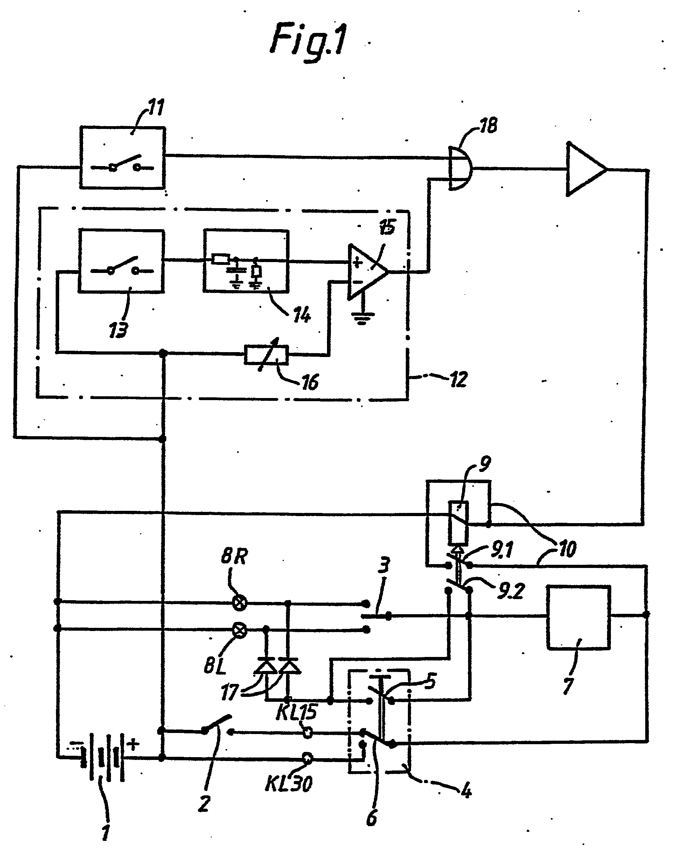

In Fig. 1 ist ein Akkumulator 1 als Bordspannungsquelle vorgesehen. Plus-Potential wird vom Akkumulator 1 einer Klemme Kl 30, einem Trägheitsschalter 11, einer beschleunigungs empfindlichen Schalteinrichtung 12 und einem Zündschalter 2 zugeführt. Bei geschlossenem Zündschalter 2 liegt Plus-Potential auch an einer Klemme Kl 15.

Ein handbetätigbarer Warnblinkschalter 4 weist einen Einschalter 5 und einen Umschalter 6 auf, welche mechanisch gekoppelt sind und gemeinsam betätigt werden. Ein Kontakt des Umschalters 6 ist an die Klemme Kl 15 angeschlossen, ein anderer Kontakt an die Klemme Kl 30. Zwischen diesen beiden Anschlüssen ist die Schaltbrücke des Umschalters 6 hin- und herschaltbar, wobei sie bei offenem Einschalter 5, d.h. Warnblinkanlage aus, an Klemme Kl 15 anliegt, bei geschlossenem Einschalter 5 an Klemme Kl 30. Vom Festkontakt des Umschalters 6 führt eine Leitung zu einem Blinkgeber 7, ein Zweig dieser Leitung führt zu einem ersten Schalter 9.1 eines Relais 9.

Vom Ausgang des Blinkgebers 7 führt eine Leitung zu einem Fahrtrichtungsschalter 3. Diese Leitung weist Zweige zu einem zweiten Schalter 9.2 des Relais 9 und zum Einschalter 5 des Warnblinkerschalters 4 auf. Die beiden Schalter 9.2 und 5 sind elektrisch parallel geschaltet und verbinden jeweils über Dioden 17 Blinkleuchten 8R und 8L mit dem Blinkgeber 7. Zur Vereinfachung des Schemas ist für jede Fahrzeugseite nur eine Blinkleuchte dargestellt, 8R für die rechte, 8L für die linke Seite, wobei diesen selbstverständlich weitere Blink- und Kontrolleuchten parallelgeschaltet werden können.

Der Fahrtrichtungsschalter 3 verbindet bei Auslenkung aus seier Mittellage von Hand wahlweise die Blinkleuchte 8R oder 8L mit dem Blinkgeber 7.

Auch die Dioden 17 sind nur zur Vereinfachung des Schaltschemas eingeschleift. Um unnötigen Spannungsabfall vor den Blinkleuchten zu vermeiden, wird man in den Schaltern 9.2 und 5 je zwei parallele Schaltkontakte vorsehen, welche jeweils einen gemeinsamen Eingangsanschluß haben, aber über getrennte Ausgangsanschlüsse zu den Blinkleuchten 8R bzw. 8L führen, so daß diese zwar gemeinsam zum Warnblinken eingeschaltet werden können, jedoch bei offenen Schaltern 9.2 und 5 elektrisch getrennt sind und bei beabsichtigtem Fahrtrichtungsblinken nicht gleichzeitig aufleuchten.

Ein Selbsthaltestromkreis 10 für das Relais 9 wird über den Zündschalter 2, den Umschalter 6 des Warnblinkerschalters 4 und den Schalter 9.1 geschlossen, sobald das Relais 9 von dem Trägheitsschalter 11 oder der beschleunigungsempfindlichen Schalteinrichtung 12 erstmals angesteuert wurde.

Die Schalteinrichtung 12 besteht mindestens aus einem Beschleunigungssensor 13 mit niederer Ansprechschwelle (ca. 0,5 bis 0,8 g), einer Integrierschaltung 14 und einem Schwellwertschalter 15, welche in Reihe geschaltet sind. Ein verstellbarer Widerstand 16 ermöglicht es, den Referenzwert des Schwellwertschalters 15 auf den zum Durchschalten erforderlichen Integralwert und damit auf die benötigte Ansprechdauer des Beschleunigungssensors 13 einzustellen. Der Trägheitsschalter 11 ist für eine hohe Ansprechschwelle (ca. 4 g) ausgelegt. Die Schalteinrichtung 12 ist ihm wirkungsmäßig und elektrisch parallel geschaltet, indem der Ausgang des Trägheitsschalters 11 und der Ausgang des Schwellwertschalters 15 zu en beiden Eingängen eines ODER-Gliedes 18 geführt sind. Dessen Ausgangssignal wird, bei Bedarf nach Verstärkung, dem Relais 9 zugeführt.

Er ergibt sich folgende Funktion der erfindungsgemäßen Vorrichtung:

Bei geschlossenem Zündschalter 2 und bei in gezeichneter Stellung stehendem Warnblinkerschalter 4 liegt Pluspotential am Blinkgeber 7, am Schalter 9.1 des Relais 9 sowie direkt vom Akkumulator 1 am Trägheitsschalter 11 und an der Schaleinrichtung 12. Der Fahrzeugführer kann, wie üblich, sowohl den Fahrtrichtungsschalter 3 als auch den Warnblinkerschalter 4 manuell betätigen, wobei im ersten Fall eine Fahrtrichtungsanzeige erfolgt, im zweiten Fall Warnblinken aller Blinkleuchten 8R, 8L. Beide Vorgänge sind manuell durch entsprechende Schalterbetätigung ausschaltbar, so daß die Schalter 3 und 4 wieder die gezeichnete Stellung einnehmen.

Wirkt nun auf das Fahrzeug eine Beschleunigung oder Verzögerung ein, deren Anteil in der Fahrtebene einen Wert von 4 g übersteigt, so schließt der Trägheitsschalter 11 und aktiviert über das ODER-Glied 18 das Relais 9, so daß beide Schalter 9.1 und 9.2 in die nicht gezeichnete Schließstellung gebracht werden.

Der Selbsthaltestromkreis 10 ist nunmehr von Akku-Plus über· Zündschalter 2, Klemme Kl 15, Umschalter 6, Schalter 9.1 und die Relaiswicklung 9 zu Akku-Minus geschlossen. Der Schalter 9.2 des Relais überbrückt gleichzeitig den Warnblinker-Einschalter 5, so daß vom Blinkgeber 7 über den Schalter 9.2 und die Dioden 17 beide Blinkleuchten 8R und 8L zum Warnblinken Spannungsimpulse erhalten.

Fahrbahnunebenheiten lassen keine so hohen Beschleunigungswerte auf das Fahrzeug einwirken, so daß der Trägheitsschalter 11 auf diese nicht anspricht. Der empfindlichere Beschleunigungssensor 13 wird jedoch auch hier schon ansprechen und ein Ausgangssignal an die Integrierschaltung 14 legen. Diese kann vorteilhaft aus einem RC-Glied bestehen, dessen Ladezeitkonstante größer als seine Entlade- oder Löschzeigkonstante ist. Impulsartig anliegende Ausgangssignale des Beschleunigungssensors 13, z.B. beim Überrollen von Fahrbahnunebenheiten, werden also nicht zu einer das Durchschalten des Schwellwertschalters 15 bewirkenden Aufladung der Integrierschaltung 14 genügen, da der Kondensator über den relativ kleinen Entladewiderstand rasch wieder entladen wird.

Wird hingegen das Fahrzeug in einer Notsituation hart abgebremst, so legt der Beschleunigungssensor 13 ein anhaltendes Spannungssignal an die Integrierschaltung 14. Diese lädt sich dadurch soweit auf, daß schließlich der Referenzwert des Schwellwertschalters 15 erreicht wird und letzterer durchschaltet. Über das ODER-Glied 18 wird nun in gleicher Weise wie beim Schließen des Trägheitsschalters 11 das Relais 9 angesteuert, es geht in Selbsthaltung und schaltet die Warnblinkanlage ein.

Zum Ausschalten der über den Relaisschalter 9.2 eingeschalteten Warnblinkanlage kann der Selbsthaltestromkreis 10 entweder durch Öffnen des Zündschalters 2 oder durch Umschalten des Umschalters 6 im Warnblinkerschalter 4 in die nicht gezeichnete Stellung unterbrochen werden. Im letzteren Fall ist die Schaltwippe des Umschalters 6 während des Schaltvorgangs kurzfristig potentialfrei, denn sie schaltet ohne Überlappung von der Klemme Kl 15 auf die Klemme Kl 30 um. Dadurch wird zwar gleichzeitig die Warnblinkanlage manuell eingeschaltet, weil der Umschalter 6 nur gemeinsam mit dem Warnblinker-Einschalter 5 betätigt werden kann. Aber durch erneutes Betätigen des eingeschaltet einrastenden Warnblinkerschalters 4 wird die Warnblinkanlage dann endgültig abgeschaltet.

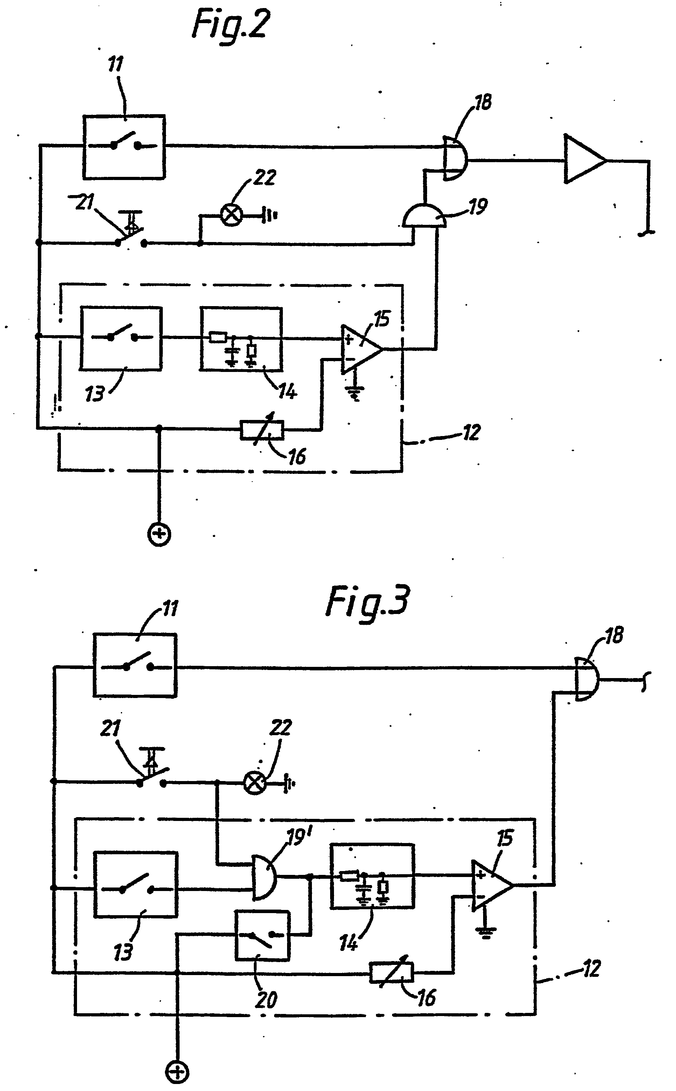

In Fig. 2 sind ein Bremssignalgeber 21 und eine Bremsleuchte 22 zusätzlich in einen Ausschnitt des Schaltschemas nach Fig. 1 eingezeichnet. Ein Ausgangssignal des Bremssignalgebers 21 und das Ausgangssignal des Schwellwertschalters 15 werden in einem UND-Glied 19 logisch verknüpft, dessen Ausgang parallel zu dem des Trägheitsschalters 11 zu einem Eingang des ODER-Gliedes 18 geführt ist.

Es müssen gleichzeitig ein Bremssignal von dem Bremssignalgeber 21 und ein Ausgangssignal des Schwellwertschalters 15 an dem UND-Glied 19 anliegen, damit bei anhaltendem Ansprechen des Beschleunigungssensors 13 die Warnblinkanlage automatisch eingeschaltet wird. Bei vollem Beschleunigen eines leistungsstarken Fahrzeuges wird trotz möglichen Ansprechens des Beschleunigungssensors 13 nicht automatisch die Warnblinkanlage eingeschaltet.

Fig. 3 zeigt ebenfalls einen Ausschnitt aus dem Schaltschema nach Fig. 1, wobei an einem UND-Glied 19' nunmehr ein Ausgang des Bremssignalgebers 21 und der Augang des Beschleunigungssensors 13 vor der Integrierschaltung 14 zusammengeführt werden. Zusätzlich ist ein Dachlagekontakt 20 vorgesehen, welchem Plus-Potential zugeführt wird und dessen Signalausgang an den Eingang der Integrierschaltung 14 angeschlossen ist.

Diese Anordnung bewirkt, daß der Integrierschaltung 14 ein Eingangssignal vom Ausgang des UND-Gliedes 19' her nur dann zugeführt wird, wenn an den Eingängen des UND-Gliedes 19 gleichzeitig Ausgangssignale des Beschleunigungssensors 13 und des Bremssignalgebers 21 anliegen. Jedoch wird durch Schließen des Dachlagekontaktes 20 nach einem Überschlag des mit der skizzierten Vorrichtung ausgerüsteten Fahrzeuges mit anschließender Landung auf dem Dach auch dann das Notsignal der Warnblinkanlage automatisch ausgelöst, wenn der Trägheitsschalter 11 nicht und der Beschleunigungssensor 13 nur kurzzeitig angesprochen haben sollten.

Der Trägheitsschalter 11 und der Beschleunigungssensor 13 sind hier zwar unterschiedlich bezeichnet, können aber prinzipiell baugleich sein, wenn die jeweilige Ansprechschwelle von 4 bzw. 0.5 bis 0.8 g in der Ausführung einstellbar ist. Derartige Beschleunigungsschalter sind allgemein bekannt, so daß hier nicht näher auf deren Bauart eingegangen werden muß. Die angegebenen Ansprechschwellen-Werte von 4 bzw. 0,5 bis 0,8 g sind Richtwerte.

Vor allem mit der niederen Ansprechschwelle des Beschleunigungssensors 13 muß selbstverständlich ein genügender Abstand zu einem möglichen Ansprechen z.B. bei Befahren von sehr steilen Gefällstrecken und gleichzeitigem Bremsen eingehalten werden. Der untere Schwellenwert von 0,5 g würde ein Fadenpendel um ca 26,5° aus der Vertikalen auslenken, wenn dessen Aufhängungspunkt mit dem angegebenen Wert horizontal beschleunigt würde. Dieselbe Pendelauslenkung würde sich bei Befahren einer 50%-Rampe ergeben - bei geländegängigen Fahrzeugen kein fernliegender Bereich.

Das Relais 9 kann man selbstverständlich durch eine elektronische Schaltung gleicher Funktion ersetzen; die Darstellung im Schaltschema dient der Vereinfachung und Anschaulichkeit.

**Patentansprüche**

1. Vorrichtung zum automatischen Einschalten einer willkürlich von Hand ein- und ausschaltbaren Warnblinkanlage eines Kraftfahrzeuges bei Aufprallunfällen und Notbremsungen, mit einem Trägheitsschalter (11), welcher mindestens auf stoßartige, in der Fahrtebene des Kraftfahrzeuges wirkende Beschleunigungen anspricht und dann über eine Schaltvorrichtung (9) mit einem Selbsthaltestromkreis (10) die Warnblinkanlage unter Überbrückung eines handbetätigbaren Warnblinker-Einschalters (5) einschaltet,
mit einem Schaltkontakt (6), welcher handbetätigt die Schaltvorrichtung (9) mit Selbsthaltestromkreis nach durch den Trägheitsschalter (11) bewirktem automatischem Einschalten durch Unterbrechung des Selbsthaltestromkreises (10) abschaltet,
**dadurch gekennzeichnet,**
daß eine beschleunigungsempfindliche Schalteinrichtung (12), die eine niedere Ansprechschwelle und ein verzögerndes Schaltverhalten aufweist, d. h. nur bei länger andauernder Überschreitung der Ansprechschwelle ein Einschaltsignal abgibt, dem Trägheitsschalter (11) mit hoher Ansprechschwelle parallelgeschaltet ist,

daß beider Ausgänge über ein ODER-Glied (18) an die Schaltvorrichtung (9) mit Selbsthaltestromkreis (10) zu deren Aktivierung angeschlossen sind, daß der handbetätigbare Warnblinker-Einschalter (5) mit dem Schaltkontakt (6), welcher in den Selbsthaltestromkreis (10) eingeschleift ist, mechanisch gekoppelt ist und daß der Schaltkontakt (6) ohne Überlappung zwischen einer über einen Zündschalter (2) geführten Spannungsversorgung (Kl. 15) und einer direkt von einem Akkumulator (1) kommenden Spannungsversorgung (Kl. 30) umschaltbar ist und beim Umschalten den geschlossenen Selbsthaltestromkreis (10) unterbricht.

2. Vorrichtung nach Anspruch 1,
**dadurch gekennzeichnet,**
daß die beschleunigungsempfindliche Schalteinrichtung (12) aus einer Reihenschaltung eines Beschleunigungssensors (13) mit niederer Ansprechschwelle, einer Integrierschaltung (14) und eines Schwellwertschalters (15) besteht.

3. Vorrichtung nach Anspruch 2,
**dadurch gekennzeichnet,**
daß die Integrierschaltung (14) aus einem RC-Glied besteht, dessen Entladezeitkonstante kleiner als seine Ladezeitkonstante ist.

4. Vorrichtung nach Anspruch 2,
**dadurch gekennzeichnet,**
daß der Beschleunigungssensor (13) ab räumlichen Beschleunigungen des Fahrzeugs zwischen dem 0,5 - 0,8fachen der Erdbeschleunigung anspricht und ein Ausgangssignal an die Integrierschaltung anlegt.

5. Vorrichtung nach Anspruch 1,
**dadurch gekennzeichnet,**
daß die Ansprechschwelle des Trägheitsschalters (11) auf Beschleunigungen in der Fahrtebene des Fahrzeuges das Vierfache der Erdbeschleunigung beträgt.

6. Vorrichtung nach Anspruch 1 oder 2 in einem Kraftfahrzeug mit Bremssignalgeber,
**dadurch gekennzeichnet,**
daß der Ausgang der beschleunigungsempfindlichen Schalteinrichtung (12) vor dem ODER-Glied (18) über ein UND-Glied (19) mit einem Ausgang des Bremssignalgebers (21) verknüpft ist.

7. Vorrichtung nach Anspruch 2 in einem Kraftfahrzeug mit Bremssignalgeber,
**dadurch gekennzeichnet,**
daß der Ausgang des Beschleunigungssensors (13) über ein UND-Glied (19') mit einem Ausgang des Bremssignalgebers (21) verknüpft ist.

8. Vorrichtung nach Anspruch 6 oder 7,
**dadurch gekennzeichnet,**
daß die beschleunigungsempfindliche Schalteinrichtung (12) ferner einen Dachlagekontakt (20) aufweist, welcher nach einer Drehung des Fahrzeuges um 180° um die Längs- oder Querachse die Schaltvorrichtung (9) mit Selbsthaltestromkreis (10) aktiviert.

## Claims

1. A device for automatically switching on a flashing hazard system of a motor vehicle, adapted to be switched on and off manually, in the case of collisions or emergency braking situations, with an inertia switch (11) which responds at least to sudden accelerations which take effect in the plane of travel of the vehicle and which then, via a switching device (9) with a self-latching circuit (10), switches on the flashing hazard system, bridging a manually operable flashing hazard system on-switch (5), comprising a switching contact (6) which, manually operated, switches off the switching device (9) with the self-latching circuit after the inertia switch (11) has brought about an automatic switch-on, by interrupting the self-latching circuit (10), characterised in that an acceleration-sensitive switching device (12) having a lower response threshold and a retarding switching behaviour, i.e. delivers a switch-on signal only if the response threshold is exceeded for a relatively long period, is connected in parallel with the inertia switch (11) which has a high response threshold, and in that both outputs are connected via an OR member (18) to the switching device (9) with the self-latching circuit (10) in order to activate it, and in that the manually operable flashing hazard system on-switch (5) is mechanically coupled to the switching contact (6) which is looped into the self-latching circuit (10) and in that the switching contact (6) can, without overlap, be switched between a voltage supply (Kl. 15) which passes through the ignition switch (2) and a voltage supply (Kl. 30) which comes directly from a battery (1), breaking the closed self-latching circuit (10) upon switch-over.

2. A device according to Claim 1, characterised in that the acceleration-sensitive switching device (12) consists of a series circuit of an acceleration sensor (13) with a low response threshold, an integrating circuit (14) and a threshold value switch (15).

3. A device according to Claim 2, characterised in that the integrated circuit (14) consists of an RC member, the discharge time constant of which is smaller than its charge time constant.

4. A device according to Claim 2, characterised in that the acceleration sensor (13) responds to spatial accelerations of the vehicle of between 0.5 and 0.8 times the Earth's acceleration and delivers an output signal to the integrating circuit.

5. A device according to Claim 1, characterised in that the response threshold of the inertia switch (11) to accelerations in the plane of travel of the vehicle amounts to four times the Earth's acceleration.

6. A device according to Claim 1 or 2 in a motor vehicle with a braking signal transmitter, characterised in that upstream of the OR member (18), the output of the acceleration-sensitive switching device (12) is connected via an AND member (19) to an output of the braking signal transmitter (21).

7. A device according to Claim 2 in a motor vehicle with a braking signal transmitter, characterised in that the output of the acceleration sensor (13) is linked to an output of the braking signal transmitter (21) via an AND member (19').

8. A device according to Claim 6 or 7, characterised in that the acceleration-sensitive switching deice (12) further comprises a roof position contact (20) which, after a 180° rotation of the vehicle about its longitudinal or transverse axis, activates the switching device (9) with the self-latching circuit (10).

## Revendications

1. Dispositif pour brancher automatiquement un dispositif d'avertissement, pouvant être à volonté branché et débranché manuellement, d'un véhicule automobile dans le cas d'accidents dûs à des chocs et à des freinages d'urgence, comportant un interrupteur inertiel (11), qui répond au moins à des accélérations brusques agissant dans le plan de déplacement du véhicule automobile et branche alors, par l'intermédiaire d'un dispositif de déclenchement (9) comportant un circuit de maintien (10), le dispositif d'avertissement, en shuntant un interrupteur (5), pouvant être actionné manuellement, de branchement de l'installation d'avertissement, comportant un contact de coupure (6), qui, actionné manuellement, débranche le dispositif de déclenchement (9) comportant le circuit de maintien, après le branchement automatique réalisé par l'interrupteur inertiel (11), au moyen d'une interruption du circuit de maintien (10), caractérisé en ce qu'une unité de déclenchement (12), qui est sensible à une accélération et possède un faible seuil de réponse et un comportement de commutation à retardement, c'est-à-dire délivre un signal de branchement uniquement dans le cas d'un dépassement d'une durée assez longue du seuil de réponse, est branché en parallèle avec l'interrupteur inertiel (11) possédant un seuil élevé de réponse, que les deux sorties sont raccordées par l'intermédiaire d'un circuit OU (18) au dispositif de déclenchement (9) comportant un circuit de maintien (10), pour l'activation de ce dispositif, que l'interrupteur (5) de branchement de l'installation d'avertissement, qui peut être actionné manuellement, est accouplé mécaniquement au contact de coupure (6), qui est inséré dans le circuit de maintien (10), et que le contact de coupure (6) est commutable, sans chevauchement, entre une alimentation en tension (Kl 15), raccordée par l'intermédiaire d'un interrupteur d'amorçage (2), et une alimentation en tension (Kl 30), raccordée directement à une batterie (1), et, lors de sa commutation, ouvre le circuit de maintien (10) fermé.

2. Dispositif selon la revendication 1, caractérisé en ce que l'unité de déclenchement (12) sensible à l'accélération est constituée par un circuit série formé d'un détecteur d'accélération (13), comportant un faible seuil de réponse, d'un circuit intégrateur (14) et d'un commutateur à valeur de seuil (15).

3. Dispositif selon la revendication 2, caractérisé en ce que le circuit intégrateur (14) est constitué par un circuit RC, dont la constante de temps de décharge est inférieure à sa constante de temps de charge.

4. Dispositif selon la revendication 2, caractérisé en ce que le détecteur d'accélération (13) répond à partir d'accélérations partielles du véhicule comprises entre 0,5 et 0,8 fois l'accélération de la pesanteur et applique un signal de sortie au circuit intégrateur.

5. Dispositif selon la revendication 1, caractérisé en ce que le seuil de réponse de l'interrupteur inertiel (11) à des accélérations se produisant dans le plan de déplacement du véhicule est égal au quadruple de l'accélération de la pesanteur.

6. Dispositif selon la revendication 1 ou 2, installé dans un véhicule automobile comportant un indicateur délivrant un signal de freinage, caractérisé en ce que la sortie de l'unité de déclenchement (12) sensible à l'accélération est combinée en amont du circuit OU (18), à une sortie du transmetteur (21) du signal de freinage, par l'intermédiaire d'un circuit ET (19).

7. Dispositif selon la revendication 2 installé dans un véhicule automobile comportant un transmetteur délivrant un signal de freinage, caractérisé en ce que la sortie du détecteur d'accélération (13) est combinée par l'intermédiaire d'un circuit ET (19') à une sortie du transmetteur (21) du signal de freinage.

8. Dispositif selon la revendication 6 ou 7, caractérisé en ce que l'unité de déclenchement (12) sensible à l'accélération comporte en outre un contact (20) de position retournée sur le toit, qui, dans le cas d'une rotation du véhicule sur 180° autour de l'axe longitudinal ou de l'axe transversal, active le dispositif de déclenchement (9) comportant le circuit de maintien (10).

EP 0 246 436 B1

Fig.1

## Fig.2

## Fig.3